# EUROPEAN PATENT SPECIFICATION

(11) **EP 3 775 300 B1**
(45) Date of publication and mention of the grant of the patent: **06.04.2022**
(21) Application number: 19727116.6
(22) Date of filing: 03.04.2019
(51) Int. Cl.: C21D 9/24, C22C 38/02, C22C 38/04, C22C 38/44, C22C 38/48

(54) **STEEL FOR MONOLITHIC AND BIMETALLIC BAND SAWS FOR WOOD**
STAHL FÜR MONOLITHISCHE UND BIMETALLISCHE BANDSÄGEN FÜR HOLZ
ACIER POUR SCIES À RUBAN MONOLITHIQUES ET BIMÉTALLIQUES POUR BOIS

(30) Priority: 11.04.2018 PL 42519718
(43) Date of publication of application: 17.02.2021
(73) Proprietor: QSGS Technology Grazyna Klepuszewska, 07-409 Ostroleka (PL)
(72) Inventor: KLEPUSZEWSKI, Jan, 07-409 Ostroleka (PL); BALA, Piotr, 32-040 Rzeszotary (PL)
(74) Representative: Godlewski, Piotr
(86) International application number: PCT/PL2019/050020
(87) International publication number: WO 2019/199193

(56) References cited:
- CN-A- 102 251 188
- JP-A- S5 776 171
- JP-A- S5 837 156
- JP-A- 2003 286 541
- US-A- 5 417 777
- US-B2- 6 869 692

## Description

The object of the invention is new steel grade intended for monolithic and bimetallic woodworking band saws.

A band saw is a tool intended basically for cold operation, but the specifics of the work, i.e. cutting various types of materials, wood in particular, and in various conditions, may result in its localised heating to high temperatures. Apart from a possible temperature rise, band saws are subject to cyclic changing loads, resulting in fatigue cracking. The band saw itself is a closed-loop band, tensioned between two or three pulleys, one of which is driven. The monolithic bands are those made wholly of a single material. The bimetallic bands essentially consist of the carrier band and the blades, made of various materials, in order to utilise their different properties, such as fatigue strength or cutting properties. Therefore, alloy steel grades are used for band saws, and one of most important properties is their adequate micro-structure.

In order to provide adequate cutting properties and fatigue strength, the microstructure of a band saw must feature a fine-grain former austenite (minimum 9, preferably 11-12) and must be composed of high-tempered martensite, without primary and secondary precipitations of carbides.

The three alloy steel grades known and currently used for monolithic and bimetallic woodworking band saws are mainly: 32CrMoV12, D6A, 51CrV4. 32CrMoV12 is a low carbon (average 0.32% by weight) alloy steel and is intended for bimetallic bands as the carrier band. The steel comprises on average 2.7% Cr, 1.1% Mo, 0.6% Ni and 0.3% V. Due to the chemical composition, among others, this is an expensive alloy steel grade, and it is not possible to obtain good cutting properties by using it, because it comprises only 0.32% C. D6A steel comprises 0.45% C, 1% Cr, 1% Mo, 0.5% Ni and 0.1% V, and is an expensive grade as well. This steel features better cutting properties than the 32CrMoV12 grade, but it is simultaneously characterised by higher coarsening propensities during austenitising for hardening. Both of the above-mentioned grades, considering their complex chemical composition, require a high temperature of austenitising for hardening (1070÷1120°C) during heat treatment. 51CrV4 steel is essentially spring steel, used for band saws, which comprises 0.5% C, 0.65% Mn, 0.95% Cr and 0.15% V on average. It features low hardening-susceptibility, i.e. the ability of obtaining a martensitic microstructure. The presence of vanadium in its chemical composition helps against austenite grain coarsening during austenitisation for hardening. In conventional heat-treatment furnaces and the application of long austenitising times, the vanadium properly serves its function, but on the production lines for continuous heat-treatment, as is the case of band saws, the time of austenitising is short; therefore, the time of treatment is compensated for with a substantially increased temperature of steel austenitising, which results in very difficult control of the austenite grain in band saws made of 51CrV4 steel. The composition of 51CrV4 steel results in the dissolution of all carbides failing, which is necessary for saturating the metallic matrix with alloy elements and carbon, or the steel is overheated and high austenite grain coarsening follows, which results in a poorer fatigue strength of the steel.

Niobium is a commonly used component of structural steels, featuring finegrains and increased mechanical properties. As the micro-additive in structural steel, it effectively enables grain coarsening inhibition by precipitation of NbC carbides during thermo-mechanical processing. The steels, however, are not heattreated by hardening and high-tempering. As an alloy additive, it is also used mostly for reducing intercrystalline corrosion of austenitic steels, particularly the welded members made of this steel. The niobium bonds whole carbon in the form of NbC, but it is usually added in high excess, e.g. in an amount of 10 x %C. Furthermore, the addition of niobium to high-temperature creep resistant steels also results in precipitation hardening by intermetallic compounds or by NbC. The niobium dissolved in a solid solution increases the steel hardening capability and substantially improves the mechanical properties at increased temperatures. Obtaining such steel characteristics requires, however, solutionising or austenitising at temperatures exceeding 1200°C. Up to the present, niobium was, however, rarely used in tool steels (e.g. the steel for fatigue-loaded parts PL225572 and alloy tool steel PL227829 do not comprise niobium additives). Band saws made of niobium-comprising steels have not been produced, either. For the tool materials, such as intended for woodworking saws, which are required to have a high fatigue strength, incorrectly selected niobium contents may result in lowering of the fatigue strength and other mechanical properties, hardness for example. Other previously proposed arrangements are disclosed in US5417777A.

The object of the invention is to provide a tool steel that is lower-alloyed than those commonly used, which is free of the prior art deficiencies.

Thus, the object of the invention is to provide a tool steel, lower-alloyed than those commonly used, intended for band saws, featuring a fine-grain microstructure, high hardening ability, high hardness, good fatigue strength and which is, simultaneously, suitable for both cold and hot operation, at high temperature variability during localised heating during operation.

Therefore, a new chemical composition of steel dedicated for monolithic or bimetallic band saws is proposed, with adequate contents of chromium, nickel and molybdenum, as well as with a niobium addition, enable to overcome the problems of the prior art.

Thus, the subject matter of the invention is a new chemical composition of steel for monolithic and bimetallic band saws. The steel, according to the invention for monolithic and bimetallic band saws, intended for heat-treatment in a continuous manner, is as defined in the appendend claims.

It has been found that the presence of chromium, manganese, molybdenum and nickel in adequate amounts, as indicated above, which provide high hardenability of the new steel, together with an adequate carbon content, enables one to obtain a high hardness and excellent mechanical properties. The addition of niobium to the above-mentioned composition prevents grain coarsening, therefore, the steel gains good fatigue properties. Furthermore, this addition is selected such that it does not result in lowering the fatigue strength and other mechanical properties, e.g. hardness.

The new chemical composition of the steel for monolithic and bimetallic band saws is particularly intended for heat treatment in a continuous manner, where rapid heating ∼50÷1000°C/s of the batch, a high austenitising temperature (50-100°C higher than that used in conventional heat treatment) and short austenitising times (depending on furnace length and belt travel speed, no longer than 120 seconds) are applied. Owing to the unique chemical composition, the new steel is not prone to strong grain coarsening, therefore, very good fatigue strength is obtained, simultaneously with good cutting and mechanical properties. This has a direct economical effect, resulting from the resignation from expensive alloy steel grades and using a lower austenitising temperature for hardening (lower than for higher-alloyed steels) and tempering (lower than for higher-alloyed steels).

Furthermore, the chemical composition of the new steel results in inhibiting austenite grain coarsening by NbC precipitations during inductive heating of monolithic saw teeth and austenitising in conveyor furnaces in lines for continuous treatment of saws. In the induction hardening process of teeth, as well as in conveyor furnaces in lines for continuous treatment of saws, one has to deal with austenitising temperatures higher than those recommended, which in other grades, e.g. 51CrV4, results in grain coarsening. The new grade, following hardening within a 950÷1000°C range (60-120s austenitising time), has the grain of former austenite within the 10-12 class range according to ATSM. Furthermore, the addition of molybdenum in the amount specified above prevents II^{nd} type temper brittleness.

Additionally, the new steel grade, considering the lower Ce carbon equivalent, facilitates laser welding of flat wire from high-speed steel with the ridge of the saw carrier band (made of the new steel grade) in bimetallic saws and results in higher joint strength, and also facilitates welding of sintered carbides to the tips of the teeth in carbide saws, providing a higher strength of the joint.

The contents of Mn in the composition of the steel may amount, as indicated above, to 0.50
- 0.75% by weight. All values of Mn contents, within the range indicated above, are considered preferable. Particularly preferably, the Mn contents in the composition of the steel amounts to 0.50
- 0.7% by weight, preferably 0.50
- 0.66% by weight, preferably 0.66 - 0.75% by weight, preferably 0.66 - 0.70% by weight, preferably 0.7 - 0.75% by weight.

The contents of Ni in the composition of the steel may amount, as indicated above, 0.4 - 0.8% by weight. All the values of Ni contents within the range indicated above, are considered preferable. Particularly preferably, the content of Ni in the steel composition amounts to 0.4 - 0.78% by weight, preferably 0.4 - 0.52% by weight, preferably 0.4 - 0.45% by weight, preferably 0.45 - 0.8% by weight, preferably 0.45 - 0.78% by weight, preferably 0.45 - 0.52%by weight, preferably 0.52 - 0.8%by weight, preferably 0.52 - 0.78% by weight, preferably 0.78 - 0.8% by weight.

The contents of Si in the composition of the steel may amount, as indicated above, to 0.1 - 0.4% by weight. All the values of Si contents in the steel composition, within the range indicated above, are considered preferable. Particularly preferably, the content of Si in the steel composition amounts to 0.10 - 0.31% by weight, preferably 0.10 - 0.18% by weight, preferably 0.10 - 0.15% by weight, preferably 0.15 - 0.40% by weight, preferably 0.15 - 0.31% by weight, preferably 0.15 - 0.18% by weight, preferably 0.18 - 0.40% by weight, preferably 0.18 - 0.31% by weight, preferably 0.31 - 0.40% by weight.

The contents of C in the composition of the steel may amount, as indicated above, to 0.48 - 0.53% by weight. All the values of C contents in the steel composition, within the range indicated above, are considered preferable. Particularly preferably, the content of C in the steel composition amounts to 0.48 - 0.51% by weight, preferably 0.48 - 0.49% by weight, preferably 0.49 - 0.53% by weight, preferably 0.49 - 0.51% by weight, preferably 0.51 - 0.53% by weight.

The contents of Cr in the composition of the steel may amount, as indicated above, to 1.10 - 1.40% by weight. All the values of Cr contents in the steel composition, within the range indicated above, are considered preferable. Particularly preferably, the content of Cr in the steel composition amounts to 1.10 - 1.38% by weight, preferably 1.10 - 1.30% by weight, preferably 1.10 - 1.21% by weight, preferably 1.21 - 1.40% by weight, preferably 1.21 - 1.38% by weight, preferably 1.21 - 1.30%by weight, preferably 1.30 - 1.40% by weight, preferably 1.30 - 1.38% by weight, preferably 1.38 - 1.40% by weight.

The contents of Mo in the composition of the steel may amount, as indicated above, to 0.25 - 0.40% by weight. All the values of Mo contents in the steel composition, within the range indicated above, are considered preferable. Particularly preferably, the content of Mo in the steel composition amounts to 0.25 - 0.36% by weight, preferably 0.25 - 0.31% by weight, preferably 0.25 - 0.29% by weight, preferably 0.29 - 0.40% by weight, preferably 0.29 - 0.36% by weight, preferably 0.29 - 0.31%by weight, preferably 0.31 - 0.40% by weight, preferably 0.31 - 0.36% by weight, preferably 0.36 - 0.40% by weight.

The contents of Nb in the composition of the steel may amount, as indicated above, to 0.10 - 0.15% by weight. All the values of Nb contents within the range indicated above are considered preferable. Particularly preferably, the content of Nb in the steel composition amounts to 0.10 - 0.12% by weight, preferably 0.10 - 0.11% by weight, preferably 0.11 - 0.15% by weight, preferably 0.11 - 0.12% by weight, preferably 0.12 - 0.15% by weight.

The amounts of both P and S in the steel composition, according to the invention, should be less than 0.02% by weight.

According to the invention, combinations of all the above-indicated amounts of elements, comprised in the steel composition, within the above specified ranges are also preferable.

The object of the invention will be presented in a non-limiting manner in embodiments. The steel, according to the following embodiments, may be obtained with melt techniques known to persons skilled in the art, i.e. by melting in an arc furnace. The composition of the steel can also be determined with measuring techniques known to persons skilled in the art, e.g. with a spark spectrometer.

### Example 1

The alloy steel intended for monolithic and bimetallic band saws comprises: 0.51% C; 1.3% Cr; 0.7% Mn; 0.15% Si; 0.52% Ni; 0.36% Mo; 0.12% Nb; 0.008% S; 0.010% P, wherein the rest is iron and unavoidable impurities. Following hardening and tempering down to approximately 470 HV10 (∼47HRC) hardness, the tensile strength obtained for bands was 1510 MPa on average, with a 1465 MPa yield point and A80 elongation equal to 8%. These properties are close to D6A and 32CrMoV12 grades, hardened and tempered to approx. 470 HV hardness, but these grades are higher alloyed and require decidedly a higher autstenitising temperature for hardening. Following hardening within a 950÷1000°C range (60-120s austenitising time), the grain of former austenite of 11 class according to ATSM was obtained. Whereas the 51CrV grade, hardened and tempered to approx. 470 HV10 hardness in the same trial, has a tensile strength of 1480 MPa on average, with a 1415 MPa yield point and low A80 elongation equal to 3.9%.

### Example 2

The alloy steel intended for monolithic and bimetallic band saws comprises: 0.49% C; 1.21% Cr; 0.75% Mn; 0.18% Si; 0.45% Ni; 0.31% Mo; 0.11% Nb; 0.005% S; 0.011% P, wherein the rest is iron and unavoidable impurities. Following hardening and tempering down to approximately 470 HV10 (∼47HRC) hardness, the tensile strength obtained for bands was 1490 MPa on average, with a 1450 MPa yield point and A80 elongation equal to 8.5%. Following hardening within a 950÷1000°C range (60-120s austenitising time), the grain of former austenite of 10-11 class according to ATSM was obtained.

### Example 3

The alloy steel intended for monolithic and bimetallic band saws comprises: 0.51% C; 1.38% Cr; 0.667% Mn; 0.31% Si; 0.78% Ni; 0.29% Mo; 0.15% Nb; 0.005% S; 0.011% P, wherein the rest is iron and unavoidable impurities. Following hardening and tempering down to approximately 470 HV10 (∼47HRC) hardness, the tensile strength obtained for bands was 1520 MPa on average, with a 1470 MPa yield point and A80 elongation equal to 7.8%. Following hardening within a 950÷1000°C range (60-120s austenitising time), the grain of former austenite of 11-12 class according to ATSM was obtained.

## Claims

1. Steel for monolithic and bimetallic band saws, intended for heat-treatment in a continuous manner, comprising, by weight, from 0.50 to 0.75% manganese, from 0.4 to 0.8% nickel, from 0.1 to 0.4% silicone, from 0.48 to 0.53% carbon, from 1.10 to 1.40% chromium, from 0.25 to 0.40% molybdenum, from 0.10 to 0.15% niobium, less than 0.02% sulphur and phosphorus by weight each, wherein the rest is iron and unavoidable impurities.

2. Steel, according to claim 1, comprising, by weight, 0.51% carbon, 1.3% chromium, 0.7% manganese, 0.15% silicon, 0.52% nickel, 0.36% molybdenum, 0.12% niobium, 0.008% sulphur and 0.010% phosphorus.

3. Steel, according to claim 1, comprising, by weight, 0.49% carbon, 1.21% chromium, 0.76% manganese, 0.18% silicon, 0.45% nickel, 0.31% molybdenum, 0.11% niobium, 0.005% sulphur and 0.011% phosphorus.

4. Steel, according to claim 1, comprising, by weight, 0.51% carbon, 1.38% chromium, 0.66% manganese, 0.31% silicon, 0.78% nickel, 0.29% molybdenum, 0.15% niobium, 0.005% sulphur and 0.010% phosphorus.

## Patentansprüche

1. Stahl für monolithische und bimetallische Bandsägen, bestimmt für die kontinuierliche Wärmebehandlung, enthaltend von 0,50 bis 0,75 Gew.-% Mangan, von 0,4 bis 0,8 Gew.-% Nickel, von 0,1 bis 0,4 Gew.-% Silizium, von 0,48 bis 0,53 Gew.-% Kohlenstoff, von 1,10 bis 1,40 Gew.-% Chrom, von 0,25 bis 0,40 Gew.-% Molybdän, von 0,10 bis 0,15 Gew.-% Niob, jeweils weniger als 0,02 Gew.-% Schwefel und Phosphor, wobei der Rest Eisen und unvermeidbare Verunreinigungen sind.

2. Stahl nach Anspruch 1, enthaltend 0,51 Gew.-% Kohlenstoff, 1,3 Gew.-% Chrom, 0,7 Gew.-% Mangan, 0,15 Gew.-% Silizium, 0,52 Gew.-% Nickel, 0,36 Gew.-% Molybdän, 0,12 Gew.-% Niob, 0,008 Gew.-% Schwefel und 0,010 Gew.-% Phosphor.

3. Stahl nach Anspruch 1, enthaltend 0,49 Gew.-% Kohlenstoff, 1,21 Gew.-% Chrom, 0,76 Gew.-% Mangan, 0,18 Gew.-% Silizium, 0,45 Gew.-% Nickel, 0,31 Gew.-% Molybdän, 0,11 Gew.-% Niob, 0,005 Gew.-% Schwefel und 0,011 Gew.-% Phosphor.

4. Stahl nach Anspruch 1, enthaltend 0,51 Gew.-% Kohlenstoff, 1,38 Gew.-% Chrom, 0,66 Gew.-% Mangan, 0,31 Gew.-% Silizium, 0,78 Gew.-% Nickel, 0,29 Gew.-% Molybdän, 0,15 Gew.-% Niob, 0,005 Gew.-% Schwefel und 0,010 Gew.-% Phosphor.

## Revendications

1. Acier pour scies à ruban monolithiques et bimétalliques, destiné à un traitement thermique en continu, comprenant, en poids, de 0,50 à 0,75% de manganèse, de 0,4 à 0,8% de nickel, de 0,1 à 0,4% de silicone, de 0, 48 à 0,53% de carbone, de 1,10 à 1,40% de chrome, de 0,25 à 0,40% de molybdène, de 0,10 à 0,15% de niobium, moins de 0,02% de soufre et de phosphore en poids chacun, le reste étant du fer et des impuretés inévitables.

2. Acier, selon la revendication 1, comprenant, en poids, 0,51% de carbone, 1,3% de chrome, 0,7% de manganèse, 0,15% de silicium, 0,52% de nickel, 0,36% de molybdène, 0,12% de niobium, 0,008% de soufre et 0,010% de phosphore.

3. Acier, selon la revendication 1, comprenant, en poids, 0,49% de carbone, 1,21% de chrome, 0,76% de manganèse, 0,18% de silicium, 0,45% de nickel, 0,31% de molybdène, 0,11% de niobium, 0,005% de soufre et 0,011 % de phosphore.

4. Acier, selon la revendication 1, comprenant, en poids, 0,51% de carbone, 1,38% de chrome, 0,66% de manganèse, 0,31% de silicium, 0,78% de nickel, 0,29% de molybdène, 0,15% de niobium, 0,005% de soufre et 0,010% de phosphore.
